# EUROPEAN PATENT SPECIFICATION

(11) **EP 4 443 397 B1**
(45) Date of publication and mention of the grant of the patent: **26.08.2026**
(21) Application number: 24166917.5
(22) Date of filing: 27.03.2024
(51) Int. Cl.: G06V 10/774, G06V 10/80, G06V 10/82

(54) **OBJECT PROCESSING METHOD, DEVICE, READABLE MEDIUM AND ELECTRONIC DEVICE**
OBJEKTVERARBEITUNGSVERFAHREN, VORRICHTUNG, LESBARES MEDIUM UND ELEKTRONISCHE VORRICHTUNG
PROCÉDÉ DE TRAITEMENT D'OBJET, DISPOSITIF, SUPPORT LISIBLE ET DISPOSITIF ÉLECTRONIQUE

(30) Priority: 28.03.2023 CN 202310317575
(43) Date of publication of application: 09.10.2024
(73) Proprietor: BEIJING YOUZHUJU NETWORK TECHNOLOGY CO. LTD., Beijing 101299 (CN)
(72) Inventor: SUN, Bin, Beijing, 100028 (CN); GUO, Qinzhen, VANCOUVER, V7Y 1K4 (CA); GAO, Cheng, Beijing, 100028 (CN)
(74) Representative: Marks & Clerk LLP

(56) References cited:
- US-A1- 2022 327 809
- YANG HUI ET AL: "Research on Cloud Computing Security & Privacy Protection of Massive Unstructured Multi-Modal Data", 2022 IEEE 8TH INTERNATIONAL CONFERENCE ON COMPUTER AND COMMUNICATIONS (ICCC), IEEE, 9 December 2022 (2022-12-09), pages 1405 - 1410, XP034311369, DOI: 10.1109/ICCC56324.2022.10065870

## Description

### CROSS-REFERENCE TO RELATED APPLICATION

The present application claims the priority to Chinese Patent Application No. 202310317575.5, filed on March 28, 2023.

### TECHNICAL FIELD

The present disclosure relates to the field of computer technology, and in particular to an object processing method, apparatus, readable medium and electronic device.

### BACKGROUND

With the progress of information technology, various types of media materials such as text, audio, image, and video, etc., emerge in an endless stream. Artificial intelligence technology can deal with different types of media materials such as category identification, content recommendation and intelligent creation, etc.

In related technologies, different types of media materials can be trained and iterated using respective models, and the deployment cost is relatively high.

US2022327809A1 discloses a method for training a model based on multi-modal data joint learning, including: obtaining multi-modal data; in which the multi-modal data include at least one type of single-modal data and at least one type of Pair multi-modal data; inputting the single-modal data and the Pair multi-modal data into a decoupling attention Transformer network model to generate respectively Token semantic representation features and cross-modal semantic representation features; and training the decoupling attention Transformer network model based on the Token semantic representation features and the cross-modal semantic representation features.

### SUMMARY

The invention is set out in the appended set of claims.

### BRIEF DESCRIPTION OF DRAWINGS

The above and other features, advantages, and aspects of embodiments of the present disclosure will become more apparent with reference to the specific implementations hereinafter in conjunction with the accompanying drawings. The same or similar reference numerals throughout the accompanying drawings denote the same or similar elements. It is to be understood that the accompanying drawings are illustrative and that originals and elements are not necessarily drawn to scale. In the accompanying drawings:
FIG. 1 is a flowchart of an object processing method according to an exemplary embodiment;
FIG. 2 is a schematic diagram of a target model according to an exemplary embodiment;
FIG. 3 is a schematic diagram of another target model according to an exemplary embodiment;
FIG. 4 is a flowchart of step S104 according to the embodiment shown in FIG. 1;
FIG. 5 is a flowchart of a method of generating a target model according to an exemplary embodiment;
FIG. 6 is a block diagram of an object processing apparatus according to an exemplary embodiment;
FIG. 7 is a block diagram of an object processing apparatus according to an exemplary embodiment; and
FIG. 8 is a block diagram of an electronic device according to an exemplary embodiment.

### DETAILED DESCRIPTION

The invention is defined by the set of appended claims. The embodiments of the present disclosure are described in more detail hereinafter with reference to the accompanying drawings. Although some embodiments of the present disclosure are shown in the accompanying drawings, it is to be understood that the present disclosure may be implemented in various forms and should not be construed as limited to the embodiments set forth herein; conversely, these embodiments are provided so that the present disclosure will be thoroughly and completely understood. It is to be understood that accompanying drawings and embodiments of the present disclosure are merely illustrative and are not intended to limit the protection scope of the present disclosure.

It is to be understood that the various steps described in the method embodiments of the present disclosure may be performed in a different order, and/or in parallel. Additionally, the method embodiments may include additional steps and/or omit the steps shown. The scope of the present disclosure is not limited in this respect.

The term "includes" or its variant used herein means "nonexclusively includes", that is "includes, but is not limited to". The term "based on" used herein means "at least partially based on". The term "an embodiment" used herein means "at least one embodiment". The term "another embodiment" used herein means "at least another embodiment". The term "some embodiments" used herein means "at least some embodiments". Related definitions of other terms are given in the description hereinafter.

It is to be noted that concepts such as "first" and "second", etc., used herein are intended to distinguish different apparatuses, modules or units, and not to limit the order of or dependency between functions performed by the apparatuses, modules or units.

It is to be noted that "one" or "a plurality" in the present disclosure is illustrative and non-limiting and that those skilled in the art should understand that "one" or "a plurality" is interpreted as "one or more" unless otherwise specified in the context. In the description of the present disclosure, unless otherwise specified, "plural" means two or more, which is similar to other quantifiers; "at least one item", "one or more items" or similar expressions refer to any combination of these items, including any combination of single item or plural items. For example, "at least one *a*" can represent any number of *a*(s); for another example, one or more of *a, b* and c can represent: *a, b, c, a-b, a-c, b-c,* or *a-b-*c, where *a, b,* c can be single or plural. "And/or" indicates an association relationship for describing associated objects, and indicates that three relationships may exist. For example, A and/or B can indicate the following three cases: only A exists, both A and B exist, and only B exists, where A and B may be singular or plural. The character "/" indicates an "or" relationship between associated objects before and after, unless otherwise specified. The singular forms "a", "an", "one", "the" and "said" are also intended to include the plural forms, unless the context clearly indicates other meanings.

In the embodiments of the present disclosure, although operations or steps are described in a specific order in the accompanying drawings, it should not be understood as requiring that these operations or steps are performed in the specific order shown or in a serial order, or that all the operations or steps shown are performed to obtain the desired result. In the embodiments of the present disclosure, these operations or steps may be performed in series; these operations or steps may also be performed in parallel; or a part of these operations or steps may be performed.

The names of messages or information exchanged between multiple apparatuses in the embodiments of the present disclosure are illustrative and not to limit the scope of the messages or information.

It is to be understood that before using technical solutions disclosed in various embodiments of the present disclosure, a user should be notified of the type, scope of use, use scene and the like of personal information involved in the present disclosure in an appropriate manner according to relevant laws and regulations, and authorization from the user should be acquired.

For example, in response to receiving an active request from a user, prompt information is sent to the user to explicitly remind the user that the requested operation requires acquisition and use of personal information of the user. Accordingly, the user can independently choose, according to the prompt information, whether to provide personal information to software or hardware, such as an electronic device, an application program, a server, or a storage medium, etc., for executing operations of the technical solution of the present disclosure.

In an alternative but non-limiting implementation, in response to receiving the active request from the user, the manner in which the prompt information is sent to the user may be, for example, in the form of a pop-up window in which the prompt information may be presented in text. Additionally, the pop-up window may also carry a selection control for the user to select "agree" or "disagree" to determine whether to provide personal information to the electronic device.

It is to be understood that the preceding process of notifying the user and obtaining authorization from the user is illustrative and does not limit the embodiments of the present disclosure, and that other manners complying with relevant laws and regulations may also be applied to the embodiments of the present disclosure.

At the same time, it is to be understood that data (including, but not limited to, the data itself and acquisition or use of the data) involved in the technical solution should comply with corresponding laws and regulations and relevant provisions.

The present disclosure will be described below in combination with specific embodiments.

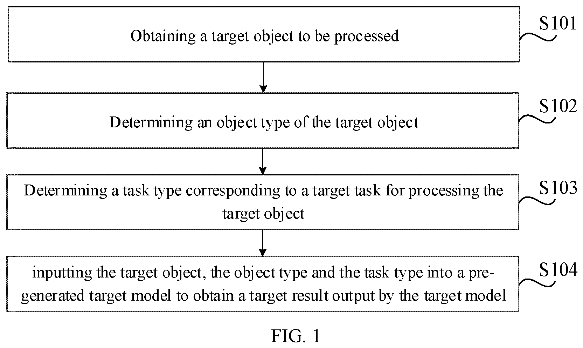

FIG. 1 is a flowchart of an object processing method according to an exemplary embodiment. The method can be applied to an electronic device, which can include a terminal device, such as a smart phone, a smart wearable device, a smart speaker, a smart tablet, a PDA (Personal Digital Assistant), a CPE (Customer Premise Equipment), a personal computer, a vehicle terminal, etc. The electronic device can also include a server, such as a local server or a cloud server. As shown in FIG. 1, the method can include:
S101: obtaining a target object to be processed.

The target object can include at least one of target text, target audio, target image and target video.

S102: determining an object type of the target object.

The object type of the target object can include one or more.

S103: determining a task type corresponding to a target task for processing the target object.

Similarly, the target task can include one or more. Each target task corresponds to one task type.

S104: inputting the target object, the object type and the task type into a pre-generated target model to obtain a target result output by the target model.

The target model can include a feature extraction module, a plurality of object segmentation modules and a plurality of task processing modules, different object segmentation modules correspond to different object types, and different task processing modules correspond to different task types.

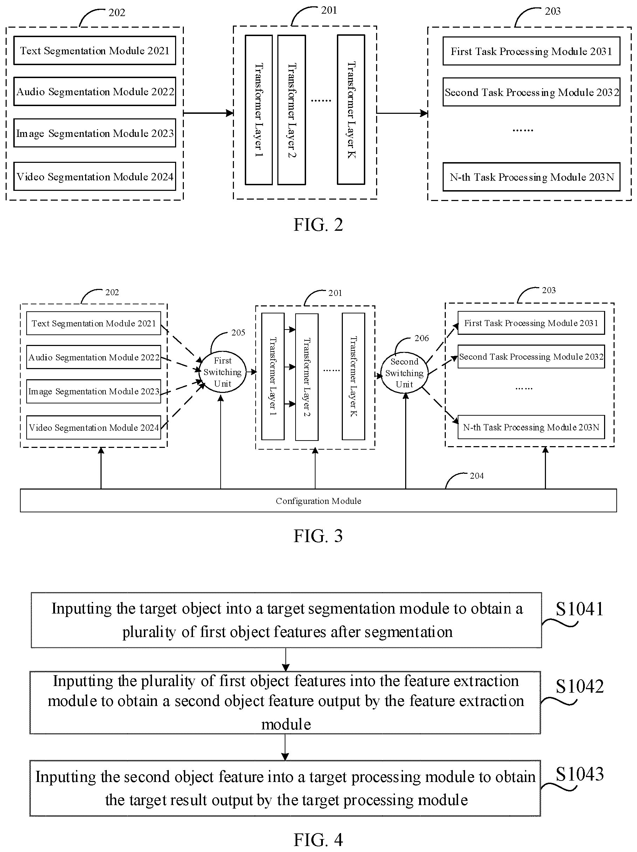

FIG. 2 is a schematic diagram of a target model according to an exemplary embodiment. As shown in FIG. 2, the target model can include a feature extraction module 201, an object segmentation module 202 and a task processing module 203, for example, there may be multiple object segmentation modules and there may also be multiple task processing modules.

In some embodiments, the target model can include a plurality of object segmentation modules, and each object segmentation module corresponds to one object type. For example, the plurality of object segmentation modules can include at least one of the following: a text segmentation module 2021, an audio segmentation module 2022, an image segmentation module 2023 and a video segmentation module 2024.

The text segmentation module 2021 is used for segmenting a text-type object; the text segmentation module can be configured to perform word segmentation on the text-type object, and the text segmentation module can also be called Text Tokenizer.

The audio segmentation module 2022 is used for segmenting an audio-type object; the audio segmentation module can be configured to perform segmentation on the audio-type object, and the audio segmentation module can also be called Audio Tokenizer.

The image segmentation module 2023 is used for segmenting an image-type object; the image segmentation module can be configured to perform segmentation on the image-type object, and the image segmentation module can also be called Image Tokenizer.

The video segmentation module 2024 is used for segmenting a video-type object. The video segmentation module can be configured to perform segmentation on the video-type object, and the video segmentation module can also be called Video Tokenizer.

In some embodiments, the target model can include a plurality of task processing modules. For example, the plurality of task processing modules can include at least one of the following: a first task processing module 2031, a second task processing module 2032, ..., and an N-th task processing module 203N. Different task processing modules can be configured to perform different types of tasks.

Exemplarily, the plurality of task processing modules can include: task modules for processing text, such as text segmentation, text recognition, text classification or other text processing; task modules for processing image, such as image classification, image detection, semantic segmentation, face recognition or other image processing; task modules for processing video, such as motion recognition, scene content classification, face recognition or other video processing; and task modules for processing audio, such as audio recognition, audio control or other audio processing.

It is to be noted that the plurality of task processing modules can include one or more of the above task modules.

Thus, the target model shown in FIG. 2 can process target objects of different object types and target tasks of different task types, so as to obtain the target result output by the target model.

The target result can be an object recognition result (e.g., text recognition, audio recognition, face recognition, motion recognition, object recognition, etc.), an object classification result or any other expected result, which is not limited in the present disclosure.

In some embodiments, the feature extraction module 201 can include a plurality of Transformer layers. For example, it can include K Transformer layers: Transformer Layer 1, Transformer Layer 2, ..., Transformer Layer K.

It is to be noted that the feature extraction module takes the plurality of Transformer layers as a backbone network of the entire target model, the input of the feature extraction module can be the output of the object segmentation module after the target object is segmented, and the output of the feature extraction module can be used as the input of different task processing modules, thus connecting the object segmentation module and the task processing module. And the target objects of different object types can be processed through the self-attention mechanism of the Transformer layers.

Further, the feature extraction module can include a shared layer and a candidate adaptation layer, for example, the shared layer can include at least one Transformer layer, and the candidate adaptation layer can also include at least one Transformer layer. The shared layer can be a Transformer layer shared by multiple different task types; the candidate adaptation layer can be a Transformer layer corresponding to a specific task type, and if the target task of the specific task type is executed, the Transformer layer can be used for feature extraction; conversely, if the target task of the specific task type is not executed, the Transformer layer may not be used.

Thus, by using the candidate adaptation layer, the capacity of the model can be increased and the processing performance of the model can be improved in large-scale tasks. Moreover, in the case where multiple sample objects of different object types are input, the information complementarity between different sample objects can be realized through the self-attention mechanism of Transformer.

FIG. 3 is a schematic diagram of another target model according to an exemplary embodiment. As shown in FIG. 3, the target model can further include a configuration module 204, and the configuration module 204 can be configured to determine a target segmentation module for processing the target object from the plurality of object segmentation modules according to the object type of the target object; the configuration module 204 can be further configured to determine a target processing module for processing the target object from the plurality of task processing modules according to the task type of the target task; the configuration module 204 can be further configured to determine a target adaptation layer for processing the target object from a plurality of candidate adaptation layers of the feature extraction module according to the task type of the target task.

**In** some embodiments, the configuration module 204 can include an automated switcher and a configuration management system. The configuration module can be used in the model training stage, and can also be used in the model inference application stage, and configure the feature extraction module 201, the object segmentation module 202 and the task processing module 203 according to the object type and the task type.

In some embodiments, the configuration module 204 can configure the target segmentation module and the task processing module through a first switching unit 205 and a second switching unit 206. The switching units can adopt gating logic to control data diversion based on the input object type and task type. The gating logic can be pre-defined in the form of configuration files. Exemplarily, an object segmentation module corresponding to each object type, a task processing module corresponding to each task type, or at least one candidate adaptation layer corresponding to each task type, can be pre-defined.

Thus, during model deployment, multiple modalities and multiple tasks can share a model framework, and at the same time, the inference speed of a single model can be balanced.

In some embodiments of the present disclosure, the target object can be a mono-modal object, that is, the target object can include only one of target text, target audio, target image or target video.

The object type of the target object can be also one. The target task for processing the target object can be one or more, and the task types of different target tasks can be different.

For example, the target object includes target text, the object type of the target object can be a text type, and the task type of the target task for processing the target object can include at least one of text segmentation, text recognition, text classification or other text processing task types.

For another example, the target object includes a target image, the object type of the target object can be an image type, and the task type of the target task for processing the target object can include at least one of image classification, image detection, semantic segmentation, face recognition or other image processing task types.

For another example, the target object includes a target video, the object type of the target object can be a video type, and the task type of the target task for processing the target object can include at least one of motion recognition, scene content classification, face recognition or other video processing task types.

For another example, the target object includes a target audio, and the object type of the target object can be an audio type, and the task type of the target task for processing the target object can include at least one of audio recognition, audio control or other audio processing task types.

In some other embodiments of the present disclosure, the target object can be a multimodal object, that is, the target object can include multiple items of target text, target audio, target image and target video. Similarly, the target object can have multiple object types.

For example, the target object can include target text and target audio, the object type of the target object can include text type and audio type, and the task type of the target task for processing the target object can include a multimodal processing task, such as correlation analysis of text and audio, scene recognition combining text and audio, etc.

For another example, the target object can include target text, target audio and target image; the object type of the target object can include text type, audio type and image type; and the task type of the target task for processing the target object can include a multimodal processing task, such as multimodal scene recognition, multimodal object recognition, etc., combining text, audio and video.

Similarly, the target object, the object type and the task type in the embodiments of the present disclosure can also be combined in other ways, which will not be described here.

By adopting the method, the target object to be processed is obtained, the object type of the target object is determined, the task type corresponding to the target task for processing the target object is determined, and the target object, the object type and the task type are input into the pre-generated target model to obtain the target result output by the target model; and the target model can include a feature extraction module, a plurality of object segmentation modules and a plurality of task processing modules, different object segmentation modules correspond to different object types, and different task processing modules correspond to different task types. Thus, different types of target objects and different types of target tasks can be processed through a unified target model, which facilitates model training and iteration, reduces the model deployment cost, and improves the model deployment efficiency.

FIG. 4 is a flowchart of step S104 according to the embodiment shown in FIG. 1. As shown in FIG. 4, the step S104 can include the following sub-steps:

S1041: inputting the target object into a target segmentation module to obtain a plurality of first object features after segmentation.

The target segmentation module can be an object segmentation module corresponding to the object type.

Exemplarily, the target segmentation module can be determined according to the object type, and the target object can be input into the target segmentation module to obtain the plurality of first object features after segmentation.

Taking that the target object is target text as an example, a long text (e.g., a sentence or a paragraph) can be divided into a plurality of short texts (e.g., words or phrases) through the segmentation process, and the first object features can be generated according to the short texts after segmentation.

In some embodiments, the target text can be segmented by using a pre-trained multilingual Sentence-bert method or the like. The Sentence-bert method can include class token, embedding token, position token, etc., respectively corresponding to the category, feature and position information of the tokens.

It should be noted that similar segmentation processing can also be performed in the case where the target object includes target audio, target image or target video. Exemplarily, the image can be segmented by using pixbert.

In some embodiments, in the case where the object type of the target object is an image type or an audio type, a plurality of sub-target objects can be obtained by segmentation, and a plurality of first target object features can be determined according to the plurality of sub-target objects. Overlapping regions can exist between multiple sub-target objects that are adjacent to each other.

For example, when segmenting a target image, an overlapping degree between segments can be preserved, that is, adjacent sub-target images obtained by segmentation are partially overlapped, and the specific overlapping degree can be adjusted according to the image size, the number of segments, the ratio of repetition rate, etc. Thus, the image correlation between sub-target objects obtained by segmentation can be better preserved, so that the accuracy of model processing can be improved.

For another example, when segmenting target audio, an overlapping degree between segments can also be preserved, that is, sub-target audios obtained by segmentation and adjacent to each other in terms of time are partially overlapped, and the specific overlapping degree can be adjusted according to the audio time length, the number of segments, the ratio of repetition rate, etc. Thus, the audio correlation between sub-target objects obtained by segmentation can be better preserved, so that the accuracy of model processing can be improved.

S1042: inputting the plurality of first object features into the feature extraction module to obtain a second object feature output by the feature extraction module.

In some embodiments, the feature extraction module can include at least one Transformer layer, and the feature extraction can be performed on the first object features through the at least one Transformer layer, so as to obtain the second object feature.

In some other embodiments, the feature extraction module can include a shared layer and a candidate adaptation layer, and the feature extraction can be performed on the first object features according to the shared layer and a target adaptation layer, so as to obtain the second object feature. The target adaptation layer can be a candidate adaptation layer corresponding to the task type.

It should be noted that the shared layer can include at least one Transformer layer, and the candidate adaptation layer can also include at least one Transformer layer. The shared layer can be a Transformer layer shared by multiple different task types, and for example, the target task of each task type needs to use the shared layer. The candidate adaptation layer can be a Transformer layer corresponding to a specific task type, and if the target task of the specific task type is executed, the Transformer layer can be used for feature extraction; conversely, if the target task of the specific task type is not executed, the Transformer layer may not be used.

Thus, by using the candidate adaptation layer, the capacity of the model can be increased and the processing performance of the model can be improved in large-scale tasks. Moreover, in the case where multiple sample objects of different object types are input, the information complementarity between different sample objects can be realized through the self-attention mechanism of Transformer.

S1043: inputting the second object feature into a target processing module to obtain the target result output by the target processing module.

The target processing module can be a task processing module corresponding to the task type.

Thus, different types of target objects and different types of target tasks can be processed through the unified target model, and the model deployment efficiency is improved.

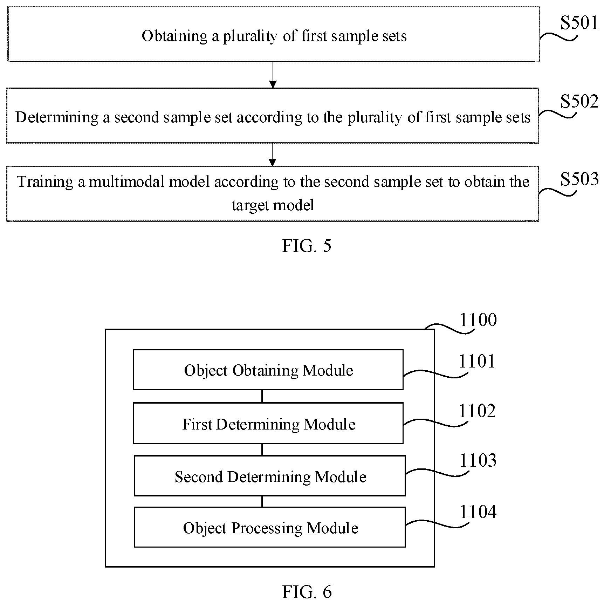

FIG. 5 is a flowchart of a method of generating a target model according to an exemplary embodiment. As shown in FIG. 5, the method can include the following steps:
S501: obtaining a plurality of first sample sets.

Each first sample set includes a plurality of sample objects and a sample result corresponding to each sample object, and different first sample sets correspond to different task types.

In some embodiments, the target model includes N task processing modules; and then, in the present step, N first sample sets can be obtained, and each first sample set corresponds to one task processing module.

It is to be noted that in the present step, the obtained sample data can also be preprocessed, and the specific manner of preprocessing can be customized and configured by the user. For example, the preprocessing can include at least one of data augmentation processing manners, such as random cropping, flipping, mirroring and adding noise.

S502: determining a second sample set according to the plurality of first sample sets.

In some embodiments, the first sample sets can be taken as the second sample set.

In some other embodiments, the first sample sets can be sampled according to the task types to obtain the second sample set.

For example, sampling weights can be determined according to the task types; each first sample set is sampled according to the sampling weight to obtain a third sample set corresponding to each first sample set; and the second sample set is determined according to the third sample set.

The sampling weight can be any numerical value between 0 and 1, and it can also be any numerical value between 0% and 100%. The sampling weight corresponding to each task type can be preset. For example, the sampling weight corresponding to the first task type can be e₁, the sampling weight corresponding to the first task type can be e₂, ..., and the sampling weight corresponding to the N-th task type can be e_{N}; and the sum of e₁, e₂, ..., e_{N} can be equal to 1 or 100%.

In some embodiments, a plurality of third sample sets can be obtained by sampling according to the following formula (1): $sampel_data = \left\{\begin{matrix}\frac{{e}_{1} ∗ {t}_{1} ∗ M}{{t}_{1} + {t}_{2} + ⋯ + {t}_{N}} \\ \frac{{e}_{2} ∗ {t}_{2} ∗ M}{{t}_{1} + {t}_{2} + ⋯ + {t}_{N}} \\ ⋯ \\ \frac{{e}_{n - 1} ∗ {t}_{N - 1} ∗ M}{{t}_{1} + {t}_{2} + ⋯ + {t}_{N}} \\ \frac{{e}_{n} ∗ {t}_{N} ∗ M}{{t}_{1} + {t}_{2} + ⋯ + {t}_{N}}\end{matrix}\right.$ where sample data represents the plurality of third sample sets, $\frac{{e}_{1} ∗ {t}_{1} ∗ M}{{t}_{1} + {t}_{2} + ⋯ + {t}_{N}}$ represents the sampling sample size of one of the third sample sets; t₁, t₂, ..., t_{N} represents the sample size of the first sample set corresponding to each task type, for example, t₁ represents the sample size of the first sample set corresponding to the first task type, t₂ represents the sample size of the first sample set corresponding to the second task type, and t_{N} represents the sample size of the first sample set corresponding to the N-th task type; e₁, e₂, ..., e_{N} represent the sampling weights of the first sample sets corresponding to various task type, for example, e₁ represents the sampling weight of the first sample set corresponding to the first task type, e₂ represents the sampling weight of the first sample set corresponding to the second task type, e_{N} represents the sampling weight of the first sample set corresponding to the N-th task type, and M represents the preset overall sampling sample size for training. According to this formula, the first sample set corresponding to each task type can be sampled, so as to obtain the plurality of third sample sets.

Thus, by adopting this method, the first sample set can be randomly sampled according to the sampling weight to obtain the third sample sets. Each third sample set is a subset or a complete set of the first sample set, and the task type corresponding to the third sample set is the same as the task type of the first sample set.

The number of the third sample sets can also be one or more, and the number of the third sample sets is the same as the number of the first sample sets.

In some embodiments, the third sample sets can be taken as the second sample set.

Thus, multiple types of samples can be included in the second sample set for training, so that the number of samples can be increased.

In some other embodiments, a third sample set with the same task type as the task processing module of the target model can be taken as the second sample set.

S503: training a multimodal model according to the second sample set to obtain the target model.

It should be noted that the structure of the multimodal model can be the same as that of the target model. For example, the multimodal model can also include a feature extraction module, a plurality of object segmentation modules and a plurality of task processing modules. For another example, the multimodal model can also include a configuration module.

In some embodiments, the multimodal model can further include a sampling module, and the sampling module can be configured to perform the steps S501 and S502 described above.

In some embodiments, the model training step can be performed cyclically according to the second sample set, until the trained multimodal model is determined to meet a preset iteration stopping condition, and the trained multimodal model is taken as the target model.

The model training step can include:

S11: obtaining a task loss value of each task processing module of the multimodal model according to the second sample set.

The task loss value can be used to characterize the difference between the prediction result output by the task processing module and the sample result.

In some embodiments, the task loss value can be obtained in the following ways:

Firstly, the sample object is input into a sample segmentation module to obtain a plurality of first sample object features after segmentation.

The sample segmentation module includes an object segmentation module corresponding to the object type of the sample object.

Exemplarily, in the case where the object type of the sample object is image or audio, a plurality of sub-sample objects can be obtained by segmentation, and the plurality of first sample object features can be determined according to the plurality of sub-sample objects. An overlapping region exists between two sub-sample objects that are adjacent to each other.

For example, when segmenting a sample image, an overlapping degree between segments can be preserved, that is, adjacent sub-target images obtained by segmentation are partially overlapped, and the specific overlapping degree can be adjusted according to the image size, the number of segments, the ratio of repetition rate, etc. Thus, the image correlation between sub-sample objects obtained by segmentation can be better preserved, so that the accuracy of model processing can be improved.

For another example, when segmenting sample audio, an overlapping degree between segments can also be preserved, that is, sub-sample audios obtained by segmentation and adjacent to each other in terms of time, and the specific overlapping degree can be adjusted according to the audio time length, the number of segments, the ratio of repetition rate, etc. Thus, the audio correlation between sub-sample objects obtained by segmentation can be better preserved, so that the accuracy of model processing can be improved.

Then, the plurality of first sample object features are input into the feature extraction module to obtain a second sample object feature output by the feature extraction module.

Next, the second sample object feature is input into a sample processing module to obtain a prediction result output by the sample processing module.

The sample processing module can be a task processing module corresponding to the task type.

Finally, the task loss value of each task processing module is obtained according to the prediction result and the sample result.

Exemplarily, the difference between the prediction result and the sample result can be calculated according to a task loss function, and used as the task loss value corresponding to the task processing module.

The task loss function corresponding to each task processing module can be the same or different, which is not limited in the present disclosure.

S12: calculating a comprehensive loss value according to the task loss values and the task weights of the plurality of task processing modules.

The task weight of each task processing module can be the same or different.

For example, the comprehensive loss value can be calculated by the following formula (2): ${\sum }_{i = 1}^{N} P _ i ∗ Norm \left(Loss_i\right)$ where N represents the total number of tasks, Loss_i represents the task loss value corresponding to the i-th task processing module, and P_i represents the task weight corresponding to the i-th task processing module. Thus, the comprehensive loss value can be obtained through formula (2).

It should be noted that the task weight can be any numerical value between 0 and 1, or it can be any numerical value between 0% and 100%; and the sum of the task weights corresponding to the plurality of task processing modules can be 1 or 100%. The task weights can set as the loss weights of different task modules in joint training according to business needs, or can be initialized to 1/N.

Thus, the task losses of different task modules can be normalized, and the training failure of other task modules can be prevented from being caused by the excessive loss weight of one task module. Moreover, the task losses of the training of different modalities and different tasks are weighted into the comprehensive loss of the overall joint training, which can promote the back propagation of gradients and the updating of model parameters in the training process.

It is to be noted that the loss function corresponding to each task processing module can also be obtained by combining the multi-task loss methods, such as UncertaintyWeighting and GradNorm, etc., which is not limited in the present disclosure.

S 13: updating, in the case where the multi-modal model is not determined to meet the preset iteration stopping condition according to the comprehensive loss value, parameters of the multi-modal model to obtain a trained multimodal model, and taking the trained multimodal model as a new multimodal model.

The preset iteration stopping condition can include that the comprehensive loss value is less than or equal to a preset loss threshold, or the variation of the comprehensive loss value within a certain number of iterations is less than a preset variation threshold; and the preset iteration stopping condition can also be a condition for stopping iteration commonly used in related technologies, which is not limited in the present disclosure. The preset loss threshold or the preset variation threshold can be any preset numerical value.

In addition, if the target neural network model is t determined to meet the preset iteration stopping condition according to the comprehensive loss value, the model training step can be stopped and the trained multimodal model can be taken as the target model.

It is to be noted that the training method of the multimodal model can also refer to the training mode in related technologies, which is not limited in the present disclosure.

**In** this way, different object types and task types are balanced in a training framework, and multimodal joint training is realized.

FIG. 6 is a block diagram of an object processing apparatus 1100 according to an exemplary embodiment. As shown in FIG. 6, the apparatus 1100 can include:
an object obtaining module 1101, configured to obtain a target object to be processed;
a first determining module 1102, configured to determine an object type of the target object;
a second determining module 1103, configured to determine a task type corresponding to a target task for processing the target object;
an object processing module 1104, configured to input the target object, the object type and the task type into a pre-generated target model to obtain a target result output by the target model.

For example, the target model includes a feature extraction module, a plurality of object segmentation modules and a plurality of task processing modules, different object segmentation modules correspond to different object types, and different task processing modules correspond to different task types.

According to one or more embodiments of the present disclosure, the object processing module 1104 is configured to: input the target object into a target segmentation module to obtain a plurality of first object features after segmentation, wherein the target segmentation module includes an object segmentation module corresponding to the object type; input the plurality of first object features into the feature extraction module to obtain a second object feature output by the feature extraction module; and input the second object feature into a target processing module to obtain the target result output by the target processing module, wherein the target processing module includes a task processing module corresponding to the task type.

According to one or more embodiments of the present disclosure, the feature extraction module includes a shared layer and candidate adaptation layers, each of the candidate adaptation layers corresponds to a different task type, and the object processing module 1104 is configured to perform feature extraction on the plurality of first object features according to the shared layer and a target adaptation layer to obtain the second object feature, for example, the target adaptation layer is a candidate adaptation layer corresponding to the task type.

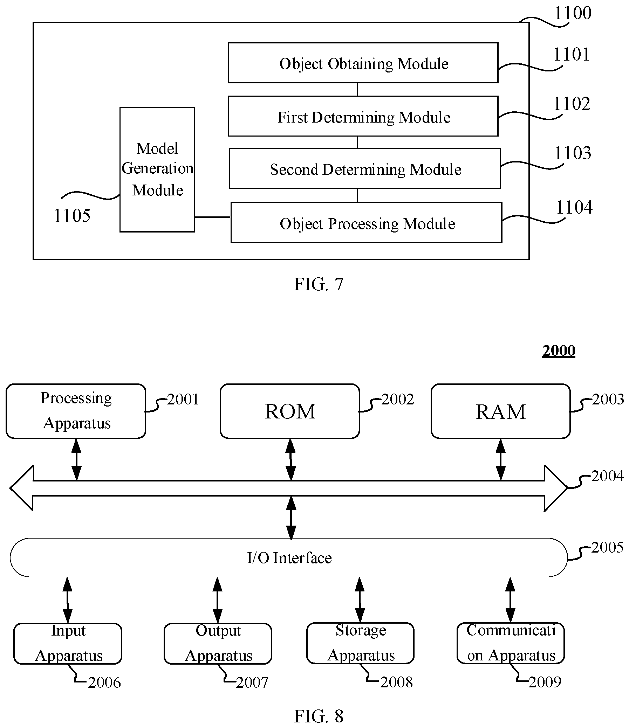

FIG. 7 is a block diagram of another object processing apparatus 1100 according to an exemplary embodiment. As shown in FIG. 7, the apparatus 1100 can further include:
a model generation module 1105, configured to: obtain a plurality of first sample sets, wherein each of the plurality of first sample sets includes a plurality of sample objects and a sample result corresponding to each of the plurality of sample objects, and different first sample sets correspond to different task types; determine a second sample set according to the plurality of first sample sets; and train a multimodal model according to the second sample set to obtain the target model.

According to one or more embodiments of the present disclosure, the model generation module 1105 is configured to: take the plurality of first sample sets as the second sample set; or sample the plurality of first sample set according to task types to obtain the second sample set.

According to one or more embodiments of the present disclosure, the model generation module 1105 is configured to: determine sampling weights according to the task types; sample each of the plurality of first sample sets according to the sampling weights to obtain a third sample set corresponding to the each of the plurality of first sample sets; and determine the second sample set according to the third sample set.

According to one or more embodiments of the present disclosure, the model generation module 1105 is configured to: take the third sample set as the second sample set; or take a third sample set with a same task type as a task processing module of the target model as the second sample set.

According to one or more embodiments of the present disclosure, the model generation module 1105 is configured to: perform a model training step cyclically according to the second sample set, until the trained multimodal model is determined to meet a preset iteration stopping condition, and take the trained multimodal model as the target model.

For example, the model training step includes:
obtaining a task loss value of each task processing module of the multimodal model according to the second sample set, wherein the task loss value is used to characterize a difference between a prediction result output by the task processing module and the sample result;
calculating a comprehensive loss value according to the task loss values and the task weights of the plurality of task processing modules;
updating, in a case where the multi-modal model is not determined to meet the preset iteration stopping condition according to the comprehensive loss value, parameters of the multi-modal model to obtain a trained multimodal model, and taking the trained multimodal model as a new multimodal model.

According to one or more embodiments of the present disclosure, the model generation module 1105 is configured to: input the sample object into a sample segmentation module to obtain a plurality of first sample object features after segmentation, wherein the sample segmentation module includes an object segmentation module corresponding to an object type of the sample object; input the plurality of the first sample object features into the feature extraction module to obtain a second sample object feature output by the feature extraction module; input the second sample object feature into a sample processing module to obtain a prediction result output by the sample processing module, wherein the sample processing module includes a task processing module corresponding to the task type; and obtain the task loss value of each task processing module according to the prediction result and the sample result.

According to one or more embodiments of the present disclosure, the model generation module 1105 is configured to: segment, in a case where the object type of the sample object is image or audio, to obtain a plurality of sub-sample objects, wherein an overlapping region exists between sub-sample objects that are adjacent to each other; and determine the plurality of first sample object features according to the plurality of sub-sample objects.

Regarding the apparatus in the above embodiments, the specific manner in which each module executes operations has been described in detail in the embodiments related to the method, and will not be repeated here.

Referring to FIG. 8, FIG. 8 shows a schematic structural diagram of an electronic device 2000 (e.g., a terminal device or a server) suitable for implementing the embodiments of the present disclosure. The terminal device in the embodiment of the present disclosure can include, but is not limited to, a mobile terminal such as a mobile phone, a notebook computer, a digital broadcast receiver, a PDA (Personal Digital Assistant), a PAD (tablet computer), a PMP (Portable Multimedia Player), a vehicle-mounted terminal (e.g., vehicle-mounted navigation terminal), etc., and a fixed terminal such as a digital TV, a desktop computer, etc. The server in the embodiment of the present disclosure can include, but is not limited to, a local server, a cloud server, a single server, a distributed servers etc. The electronic device shown in FIG. 8 is only an example and is not intended to limit the function and use range of the embodiment of the present disclosure.

As shown in FIG. 8, the electronic device 2000 can include a processing apparatus (e.g., central processing unit, graphics processing unit, etc.) 2001, which can execute various appropriate actions and processes according to a program stored on a read-only memory (ROM) 2002 or a program loaded from a storage apparatus 2008 into a random access memory (RAM) 2003. In the RAM 2003, various programs and data necessary for the operations of the electronic device 2000 are also stored. The processing apparatus 2001, the ROM 2002, and the RAM 2003 are connected to each other through a bus 2004. An input/output (I/O) interface 2005 is also connected to the bus 904.

Generally, the following apparatuses can be connected to the I/O interface 905: an input apparatus 2006 including, for example, a touch screen, a touch pad, a keyboard, a mouse, a camera, a microphone, an accelerometer, a gyroscope, etc.; an output apparatus 2007 including, for example, a liquid crystal display (LCD), a speaker, a vibrator, etc.; a storage apparatus 2008 including, for example, a magnetic tape, a hard disk, etc.; and a communication apparatus 2009. The communication apparatus 2009 can allow the electronic device 2000 to perform wireless or wired communication with another device to exchange data. While FIG. 8 illustrates the electronic device 2000 with various apparatuses, it should be understood that all illustrated apparatuses are not required to be implemented or provided. More or fewer apparatuses can be alternatively implemented or provided.

In particular, according to the embodiment of the present disclosure, the process described above with reference to the flowcharts can be implemented as a computer software program. For example, an embodiment of the present disclosure includes a computer program product including a computer program carried on a non-transitory computer-readable medium, and the computer program contains program codes for performing the method illustrated by the flowcharts. In such an embodiment, the computer program can be downloaded and installed from a network via the communication apparatus 2009, or installed from the storage apparatus 2008, or installed from the ROM 2002. When executed by the processing apparatus 2001, the computer program performs the above functions defined in the method according to the embodiment of the present disclosure.

It should be noted that the above computer-readable medium of the present disclosure can be a computer-readable signal medium or a computer-readable storage medium or any combination thereof. The computer-readable storage medium can be, for example, but not limited to, an electronic, magnetic, optical, electromagnetic, infrared, or semiconductor system, apparatus, or device, or any combination of the above. More specific examples of the computer-readable storage medium can include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium can be any tangible medium containing or storing a program, for example, the program can be used by or in conjunction with an instruction execution system, apparatus, or device. In the present disclosure, the computer-readable signal medium can include a data signal propagated on a baseband or as part of a carrier wave, in which computer-readable program code is carried. Such a propagated data signal can be in a variety of forms, including but not limited to an electro-magnetic signal, an optical signal, or any suitable combination of the above. The computer-readable signal medium can also be any computer-readable medium other than the computer-readable storage medium, and the computer-readable signal medium can send, propagate, or transmit a program for use by or in conjunction with an instruction execution system, apparatus, or device. Program codes contained on the computer-readable medium can be transmitted using any suitable medium, including but not limited to: an electrical wire, an optical cable, RF (radio frequency), etc., or any suitable combination of the above.

In some implementations, a client and a server can communicate using any network protocol currently known or to be developed in the future, such as HTTP (HyperText Transfer Protocol), etc., and can be interconnected with any form or medium of digital data communication (e.g., a communication network). Examples of the communication network include a local area network ("LAN"), a wide area network ("WAN"), an internet (e.g., the Internet), and a peer-to-peer network (e.g., ad hoc peer-to-peer network), as well as network currently known or to be developed in the future.

The above computer-readable medium can be contained in the above electronic device; or can exist alone without being assembled into the electronic device.

The above computer-readable medium has thereon carried one or more programs which, when executed by the electronic device, cause the electronic device to: obtain a target object to be processed; determine an object type of the target object; determine a task type corresponding to a target task for processing the target object; and input the target object, the object type and the task type into a pre-generated target model to obtain a target result output by the target model; for example, the target model includes a feature extraction module, a plurality of object segmentation modules and a plurality of task processing modules, different object segmentation modules correspond to different object types, and different task processing modules correspond to different task types.

Computer program codes for performing operations of the present disclosure can be written in one or more programming languages or a combination thereof, for example, the programming language includes, but is not limited to, an object-oriented programming language such as Java, Smalltalk, C++, and also includes a conventional procedural programming language such as a "C" language or similar programming language. The program codes can be executed entirely on a user computer, partly on the user computer, as a stand-alone software package, partly on the user computer and partly on a remote computer, or entirely on the remote computer or server. In a scene where the remote computer is involved, the remote computer can be connected to the user computer through any type of network, including a local area network (LAN) or a wide area network (WAN), or can be connected to an external computer (for example, through the Internet using an Internet service provider).

The flowcharts and block diagrams in the accompanying drawings illustrate the possibly implemented architecture, functions, and operations of the system, method and computer program product according to various embodiments of the present disclosure. In this regard, each block in the flowcharts or block diagrams can represent one module, program segment, or portion of code, which contains one or more executable instructions for implementing the specified logic function. It is also to be noted that, in some alternative implementations, functions noted in blocks can occur in an order different from an order noted in the drawings. For example, two blocks shown in succession can, in fact, be executed substantially concurrently, and they can sometimes be executed in a reverse order, which depends upon functions involved. It is also to be noted that each block in the block diagrams and/or flowcharts, and a combination of blocks in the block diagrams and/or flowcharts, can be implemented by a dedicated hardware-based system that performs a specified function or operation, or a combination of dedicated hardware and computer instructions.

The involved module described in the embodiment of the present disclosure can be implemented by software or hardware. The name of the module does not, in some cases, constitute a limitation on the module itself. For example, the object obtaining module can also be described as "a module for obtaining a target object to be processed".

The functions described herein above can be performed, at least in part, by one or more hardware logic components. For example, without limitations, an exemplary type of hardware logic component that can be used includes: a field programmable gate array (FPGA), an application specific integrated circuit (ASIC), an application specific standard product (ASSP), a system on a chip (SOC), a complex programmable logic device (CPLD), and so on.

In the context of the present disclosure, a machine-readable medium can be a tangible medium, which can contain or store a program that is used by or in conjunction with an instruction execution system, apparatus, or device. The machine-readable medium can be a machine-readable signal medium or a machine-readable storage medium. The machine-readable medium can include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, an object processing method is provided, which includes:
obtaining a target object to be processed;
determining an object type of the target object;
determining a task type corresponding to a target task for processing the target object;
inputting the target object, the object type and the task type into a pre-generated target model to obtain a target result output by the target model.

For example, the target model includes a feature extraction module, a plurality of object segmentation modules and a plurality of task processing modules, different object segmentation modules correspond to different object types, and different task processing modules correspond to different task types.

According to one or more embodiments of the present disclosure, the inputting the target object, the object type and the task type into a pre-generated target model to obtain a target result output by the target model includes:
inputting the target object into a target segmentation module to obtain a plurality of first object features after segmentation, wherein the target segmentation module includes an object segmentation module corresponding to the object type;
inputting the plurality of first object features into the feature extraction module to obtain a second object feature output by the feature extraction module;
inputting the second object feature into a target processing module to obtain the target result output by the target processing module, wherein the target processing module includes a task processing module corresponding to the task type.

According to one or more embodiments of the present disclosure, the feature extraction module includes a shared layer and candidate adaptation layers, each of the candidate adaptation layers corresponds to a different task type; the inputting the plurality of first object features into the feature extraction module to obtain a second object feature output by the feature extraction module includes:
performing feature extraction on the plurality of first object features according to the shared layer and a target adaptation layer to obtain the second object feature, wherein the target adaptation layer is a candidate adaptation layer corresponding to the task type.

According to one or more embodiments of the present disclosure, the target model is generated by:
obtaining a plurality of first sample sets, wherein each of the plurality of first sample sets includes a plurality of sample objects and a sample result corresponding to each of the plurality of sample objects, and different first sample sets correspond to different task types;
determining a second sample set according to the plurality of first sample sets;
training a multimodal model according to the second sample set to obtain the target model.

According to one or more embodiments of the present disclosure, the determining a second sample set according to the plurality of first sample sets includes:
taking the plurality of first sample sets as the second sample set; or
sampling the plurality of first sample set according to task types to obtain the second sample set.

According to one or more embodiments of the present disclosure, the sampling the plurality of first sample set according to task types to obtain the second sample set includes:
determining sampling weights according to the task types;
sampling each of the plurality of first sample sets according to the sampling weights to obtain a third sample set corresponding to the each of the plurality of first sample sets;
determining the second sample set according to the third sample set.

According to one or more embodiments of the present disclosure, the determining the second sample set according to the third sample set includes:
taking the third sample set as the second sample set; or
taking a third sample set with a same task type as a task processing module of the target model as the second sample set.

According to one or more embodiments of the present disclosure, the training a multimodal model according to the second sample set to obtain the target model includes:
performing a model training step cyclically according to the second sample set, until the trained multimodal model is determined to meet a preset iteration stopping condition, and taking the trained multimodal model as the target model.

For example, the model training step includes:
obtaining a task loss value of each task processing module of the multimodal model according to the second sample set, wherein the task loss value is used to characterize a difference between a prediction result output by the task processing module and the sample result;
calculating a comprehensive loss value according to the task loss values and the task weights of the plurality of task processing modules;
updating, in a case where the multi-modal model is not determined to meet the preset iteration stopping condition according to the comprehensive loss value, parameters of the multi-modal model to obtain a trained multimodal model, and taking the trained multimodal model as a new multimodal model.

According to one or more embodiments of the present disclosure, the obtaining a task loss value of each task processing module of the multimodal model according to the second sample set includes:
inputting the sample object into a sample segmentation module to obtain a plurality of first sample object features after segmentation, wherein the sample segmentation module includes an object segmentation module corresponding to an object type of the sample object;
inputting the plurality of the first sample object features into the feature extraction module to obtain a second sample object feature output by the feature extraction module;
inputting the second sample object feature into a sample processing module to obtain a prediction result output by the sample processing module, wherein the sample processing module includes a task processing module corresponding to the task type;
obtaining the task loss value of each task processing module according to the prediction result and the sample result.

According to one or more embodiments of the present disclosure, the inputting the sample object into a sample segmentation module to obtain a plurality of first sample object features after segmentation includes:
segmenting, in a case where the object type of the sample object is image or audio, to obtain a plurality of sub-sample objects, wherein an overlapping region exists between sub-sample objects that are adjacent to each other;
determining the plurality of first sample object features according to the plurality of sub-sample objects.

According to one or more embodiments of the present disclosure, an object processing apparatus is provided, which includes:
an object obtaining module, configured to obtain a target object to be processed;
a first determining module, configured to determine an object type of the target object;
a second determining module, configured to determine a task type corresponding to a target task for processing the target object;
an object processing module, configured to input the target object, the object type and the task type into a pre-generated target model to obtain a target result output by the target model.

For example, the target model includes a feature extraction module, a plurality of object segmentation modules and a plurality of task processing modules, different object segmentation modules correspond to different object types, and different task processing modules correspond to different task types.

According to one or more embodiments of the present disclosure, the object processing module is configured to: input the target object into a target segmentation module to obtain a plurality of first object features after segmentation, wherein the target segmentation module includes an object segmentation module corresponding to the object type; input the plurality of first object features into the feature extraction module to obtain a second object feature output by the feature extraction module; and input the second object feature into a target processing module to obtain the target result output by the target processing module, wherein the target processing module includes a task processing module corresponding to the task type.

According to one or more embodiments of the present disclosure, the feature extraction module includes a shared layer and candidate adaptation layers, each of the candidate adaptation layers corresponds to a different task type, and the object processing module is configured to perform feature extraction on the plurality of first object features according to the shared layer and a target adaptation layer to obtain the second object feature, wherein the target adaptation layer is a candidate adaptation layer corresponding to the task type.

According to one or more embodiments of the present disclosure, the apparatus further includes:
a model generation module, configured to: obtain a plurality of first sample sets, wherein each of the plurality of first sample sets includes a plurality of sample objects and a sample result corresponding to each of the plurality of sample objects, and different first sample sets correspond to different task types; determine a second sample set according to the plurality of first sample sets; and train a multimodal model according to the second sample set to obtain the target model.

According to one or more embodiments of the present disclosure, the model generation module is configured to: take the plurality of first sample sets as the second sample set; or sample the plurality of first sample set according to task types to obtain the second sample set.

According to one or more embodiments of the present disclosure, the model generation module is configured to: determine sampling weights according to the task types; sample each of the plurality of first sample sets according to the sampling weights to obtain a third sample set corresponding to the each of the plurality of first sample sets; and determine the second sample set according to the third sample set.

According to one or more embodiments of the present disclosure, the model generation module is configured to: take the third sample set as the second sample set; or take a third sample set with a same task type as a task processing module of the target model as the second sample set.

According to one or more embodiments of the present disclosure, the model generation module is configured to: perform a model training step cyclically according to the second sample set, until the trained multimodal model is determined to meet a preset iteration stopping condition, and take the trained multimodal model as the target model.

For example, the model training step includes:
obtaining a task loss value of each task processing module of the multimodal model according to the second sample set, wherein the task loss value is used to characterize a difference between a prediction result output by the task processing module and the sample result;
calculating a comprehensive loss value according to the task loss values and the task weights of the plurality of task processing modules;
updating, in a case where the multi-modal model is not determined to meet the preset iteration stopping condition according to the comprehensive loss value, parameters of the multi-modal model to obtain a trained multimodal model, and taking the trained multimodal model as a new multimodal model.

According to one or more embodiments of the present disclosure, the model generation module is configured to: input the sample object into a sample segmentation module to obtain a plurality of first sample object features after segmentation, wherein the sample segmentation module includes an object segmentation module corresponding to an object type of the sample object; input the plurality of the first sample object features into the feature extraction module to obtain a second sample object feature output by the feature extraction module; input the second sample object feature into a sample processing module to obtain a prediction result output by the sample processing module, wherein the sample processing module includes a task processing module corresponding to the task type; and obtain the task loss value of each task processing module according to the prediction result and the sample result.

According to one or more embodiments of the present disclosure, the model generation module is configured to: segment, in a case where the object type of the sample object is image or audio, to obtain a plurality of sub-sample objects, wherein an overlapping region exists between sub-sample objects that are adjacent to each other; and determine the plurality of first sample object features according to the plurality of sub-sample objects.

The above description is an explanation of the preferred embodiments of the present disclosure and the applied technical principles.

Furthermore, while various operations are depicted in a specific order, this should not be understood as requiring that such operations be performed in the specific order shown or in a sequential order. Under certain circumstances, multitasking and parallel processing may be advantageous. Some features that are described in the context of separate embodiments can also be implemented in combination in a single embodiment. Conversely, various features that are described in the context of a single embodiment can also be implemented in multiple embodiments separately or in any suitable subcombination.

## Claims

1. An object processing method, wherein the method comprises:
obtaining, (S101), a target object to be processed;
inputting, (S104), the target object, an object type of the target object and a task type corresponding to a target task for processing the target object into a pre-generated target model to obtain a target result output by the target model, wherein the target model is a mono-modal object or a multi-modal object, and the target result is an object recognition result or an object classification result;
wherein the target model comprises a feature extraction module, a plurality of object segmentation modules and a plurality of task processing modules, wherein the feature extraction module is coupled to the plurality of object segmentation modules and the different task processing modules, different object segmentation modules correspond to different object types, and different task processing modules correspond to different task types,
wherein the inputting, (S104), the target object, the object type and the task type into the pre-generated target model to obtain the target result output by the target model comprises:
inputting, (S1041), the target object into a target segmentation module to obtain a plurality of first object features after segmentation, wherein the target segmentation module comprises an object segmentation module corresponding to the object type;
inputting, (S1042), the plurality of first object features into the feature extraction module to obtain a second object feature output by the feature extraction module;
inputting, (S1043), the second object feature into a target processing module to obtain the target result output by the target processing module, wherein the target processing module comprises a task processing module corresponding to the task type,
wherein the method is **characterized in that** the feature extraction module comprises a shared layer and candidate adaptation layers, each of the candidate adaptation layers corresponds to a different task type; the inputting, (S1042), the plurality of first object features into the feature extraction module to obtain the second object feature output by the feature extraction module comprises:
performing feature extraction on the plurality of first object features according to the shared layer and a target adaptation layer to obtain the second object feature, wherein the target adaptation layer is a candidate adaptation layer corresponding to the task type.

2. The method according to claim 1, **characterized in that** the target model is generated by:
obtaining, (S501), a plurality of first sample sets, wherein each of the plurality of first sample sets comprises a plurality of sample objects and a sample result corresponding to each of the plurality of sample objects, and different first sample sets correspond to different task types;
determining, (S502), a second sample set according to the plurality of first sample sets;
training, (S503), a multimodal model according to the second sample set to obtain the target model.

3. The method according to claim 2, **characterized in that** the determining a second sample set according to the plurality of first sample sets comprises:
taking the plurality of first sample sets as the second sample set; or
sampling the plurality of first sample set according to task types to obtain the second sample set.

4. The method according to claim 3, **characterized in that** the sampling the plurality of first sample set according to task types to obtain the second sample set comprises:
determining sampling weights according to the task types;
sampling each of the plurality of first sample sets according to the sampling weights to obtain a third sample set corresponding to the each of the plurality of first sample sets;
determining the second sample set according to the third sample set.

5. The method according to claim 4, **characterized in that** the determining the second sample set according to the third sample set comprises:
taking the third sample set as the second sample set; or
taking a third sample set with a same task type as a task processing module of the target model as the second sample set.

6. The method according to claim 2, **characterized in that** the training a multimodal model according to the second sample set to obtain the target model comprises:
performing a model training step cyclically according to the second sample set, until the trained multimodal model is determined to meet a preset iteration stopping condition, and taking the trained multimodal model as the target model;
wherein the model training step comprises:
obtaining a task loss value of each task processing module of the multimodal model according to the second sample set, wherein the task loss value is used to characterize a difference between a prediction result output by the task processing module and the sample result;
calculating a comprehensive loss value according to the task loss values and the task weights of the plurality of task processing modules;
updating, in a case where the multi-modal model is not determined to meet the preset iteration stopping condition according to the comprehensive loss value, parameters of the multi-modal model to obtain a trained multimodal model, and taking the trained multimodal model as a new multimodal model.

7. The method according to claim 6, **characterized in that** the obtaining a task loss value of each task processing module of the multimodal model according to the second sample set comprises:
inputting the sample object into a sample segmentation module to obtain a plurality of first sample object features after segmentation, wherein the sample segmentation module comprises an object segmentation module corresponding to an object type of the sample object;
inputting the plurality of the first sample object features into the feature extraction module to obtain a second sample object feature output by the feature extraction module;
inputting the second sample object feature into a sample processing module to obtain a prediction result output by the sample processing module, wherein the sample processing module comprises a task processing module corresponding to the task type;
obtaining the task loss value of each task processing module according to the prediction result and the sample result.

8. The method according to claim 7, **characterized in that** the inputting the sample object into a sample segmentation module to obtain a plurality of first sample object features after segmentation comprises:
segmenting, in a case where the object type of the sample object is image or audio, to obtain a plurality of sub-sample objects, wherein sub-sample objects that are adjacent to each other are partially overlapped;
determining the plurality of first sample object features according to the plurality of sub-sample objects.

9. An object processing apparatus (1100), comprising:
an object obtaining module (1101), configured to obtain a target object to be processed;
a first determining module (1102), configured to determine an object type of the target object;
a second determining module (1103), configured to determine a task type corresponding to a target task for processing the target object;
an object processing module (1104), configured to input the target object, the object type and the task type into a pre-generated target model to obtain a target result output by the target model, wherein the target model is a mono-modal object or a multi-modal object, and the target result is an object recognition result or an object classification result;
wherein the target model comprises a feature extraction module, a plurality of object segmentation modules and a plurality of task processing modules, wherein the feature extraction module is coupled to the plurality of object segmentation modules and the different task processing modules, different object segmentation modules correspond to different object types, and different task processing modules correspond to different task types,
wherein object processing module (1104) is further configured to:
input the target object into a target segmentation module to obtain a plurality of first object features after segmentation, wherein the target segmentation module comprises an object segmentation module corresponding to the object type,
input the plurality of first object features into the feature extraction module to obtain a second object feature output by the feature extraction module, and
input the second object feature into a target processing module to obtain the target result output by the target processing module, wherein the target processing module comprises a task processing module corresponding to the task type,
wherein the object processing apparatus is **characterized in that** the feature extraction module comprises a shared layer and candidate adaptation layers, each of the candidate adaptation layers corresponds to a different task type,
wherein the object processing module (1104) is further configured to:
perform feature extraction on the plurality of first object features according to the shared layer and a target adaptation layer to obtain the second object feature, wherein the target adaptation layer is a candidate adaptation layer corresponding to the task type.

10. A computer-readable medium, storing a computer program thereon, **characterized in that** the computer program, when executed by a processing apparatus, realizes steps of the method according to any one of claims 1-8.

11. An electronic device (2000), **characterized in** comprising:
a storage apparatus (2008), storing a computer program thereon;
a processing apparatus (2001), configured to execute the computer program on the storage apparatus (2008) to realize steps of the method according to any one of claims 1-8.

## Patentansprüche

1. Objektverarbeitungsverfahren, wobei das Verfahren umfasst:
Erhalten (S101) eines zu verarbeitenden Zielobjekts;
Eingeben (S104) des Zielobjekts, eines Objekttyps des Zielobjekts und eines Aufgabentyps, der einer Zielaufgabe zum Verarbeiten des Zielobjekts entspricht, in ein vorab generiertes Zielmodell, um ein von dem Zielmodell ausgegebenes Zielergebnis zu erhalten, wobei das Zielmodell ein monomodales Objekt oder ein multimodales Objekt ist und das Zielergebnis ein Objekterkennungsergebnis oder ein Objektklassifizierungsergebnis ist;
wobei das Zielmodell ein Merkmalsextraktionsmodul, eine Vielzahl von Objektsegmentierungsmodulen und eine Vielzahl von Aufgabenverarbeitungsmodulen umfasst, wobei das Merkmalsextraktionsmodul mit der Vielzahl von Objektsegmentierungsmodulen und den verschiedenen Aufgabenverarbeitungsmodulen gekoppelt ist, verschiedene Objektsegmentierungsmodule verschiedenen Objekttypen entsprechen und verschiedene Aufgabenverarbeitungsmodule verschiedenen Aufgabentypen entsprechen,
wobei das Eingeben (S104) des Zielobjekts, des Objekttyps und des Aufgabentyps in das vorab generierte Zielmodell, um das von dem Zielmodell ausgegebene Zielergebnis zu erhalten, umfasst:
Eingeben (S1041) des Zielobjekts in ein Zielsegmentierungsmodul, um nach Segmentierung eine Vielzahl von ersten Objektmerkmalen zu erhalten, wobei das Zielsegmentierungsmodul ein dem Objekttyp entsprechendes Objektsegmentierungsmodul umfasst;
Eingeben (S1042) der Vielzahl von ersten Objektmerkmalen in das Merkmalsextraktionsmodul, um ein von dem Merkmalsextraktionsmodul ausgegebenes zweites Objektmerkmal zu erhalten;
Eingeben (S1043) des zweiten Objektmerkmals in ein Zielverarbeitungsmodul, um das von dem Zielverarbeitungsmodul ausgegebene Zielergebnis zu erhalten, wobei das Zielverarbeitungsmodul ein dem Aufgabentyp entsprechendes Aufgabenverarbeitungsmodul umfasst,
wobei das Verfahren **dadurch gekennzeichnet ist, dass** das Merkmalsextraktionsmodul eine gemeinsam genutzte Schicht und Kandidatenanpassungsschichten umfasst, wobei jede der Kandidatenanpassungsschichten einem anderen Aufgabentyp entspricht; das Eingeben (S1042) der Vielzahl von ersten Objektmerkmalen in das Merkmalsextraktionsmodul, um das von dem Merkmalsextraktionsmodul ausgegebene zweite Objektmerkmal zu erhalten, umfasst:
Durchführen von Merkmalsextraktion an der Vielzahl von ersten Objektmerkmalen anhand der gemeinsam genutzten Schicht und einer Zielanpassungsschicht, um das zweite Objektmerkmal zu erhalten, wobei die Zielanpassungsschicht eine dem Aufgabentyp entsprechende Kandidatenanpassungsschicht ist.

2. Verfahren nach Anspruch 1, **dadurch gekennzeichnet, dass** das Zielmodell generiert wird durch:
Erhalten (S501) einer Vielzahl von ersten Beispielmengen, wobei jede der Vielzahl von ersten Beispielmengen eine Vielzahl von Beispielobjekten und ein jedem der Vielzahl von Beispielobjekten entsprechendes Beispielergebnis umfasst, und verschiedene erste Beispielmengen verschiedenen Aufgabentypen entsprechen;
Bestimmen (S502) einer zweiten Beispielmenge anhand der Vielzahl von ersten Beispielmengen;
Trainieren (S503) eines multimodalen Modells anhand der zweiten Beispielmenge, um das Zielmodell zu erhalten.

3. Verfahren nach Anspruch 2, **dadurch gekennzeichnet, dass** das Bestimmen einer zweiten Beispielmenge anhand der Vielzahl von ersten Beispielmengen umfasst:
Hernehmen der Vielzahl von ersten Beispielmengen als zweite Beispielmenge; oder
Beproben der Vielzahl von ersten Beispielmengen anhand von Aufgabentypen, um die zweite Beispielmenge zu erhalten.

4. Verfahren nach Anspruch 3, **dadurch gekennzeichnet, dass** das Beproben der Vielzahl von ersten Beispielmengen anhand von Aufgabentypen, um die zweite Beispielmenge zu erhalten, umfasst:
Bestimmen von Beprobungsgewichten anhand der Aufgabentypen;
Beproben jeder der Vielzahl von ersten Beispielmengen anhand der Beprobungsgewichte, um eine dritte Beispielmenge zu erhalten, die der jeweiligen der Vielzahl von ersten Beispielmengen entspricht;
Bestimmen der zweiten Beispielmenge anhand der dritten Beispielmenge.

5. Verfahren nach Anspruch 4, **dadurch gekennzeichnet, dass** das Bestimmen der zweiten Beispielmenge anhand der dritten Beispielmenge umfasst:
Hernehmen der dritten Beispielmenge als zweite Beispielmenge; oder
Hernehmen einer dritten Beispielmenge mit demselben Aufgabentyp wie ein Aufgabenverarbeitungsmodul des Zielmodells, als zweite Beispielmenge.

6. Verfahren nach Anspruch 2, **dadurch gekennzeichnet, dass** das Trainieren eines multimodalen Modells anhand der zweiten Beispielmenge, um das Zielmodell zu erhalten, umfasst:
zyklisches Durchführen eines Modelltrainingsschritts anhand der zweiten Beispielmenge, bis bestimmt wird, dass das trainierte multimodale Modell eine voreingestellte Iterations-Stoppbedingung erfüllt, und Hernehmen des trainierten multimodalen Modells als Zielmodell;
wobei der Modelltrainingsschritt umfasst:
Erhalten eines Aufgabenverlustwerts jedes Aufgabenverarbeitungsmoduls des multimodalen Modells anhand der zweiten Beispielmenge, wobei der Aufgabenverlustwert verwendet wird, um eine Differenz zwischen einem von dem Aufgabenverarbeitungsmodul ausgegebenen Vorhersageergebnis und dem Beispielergebnis zu charakterisieren;
Berechnen eines Gesamtverlustwerts anhand der Aufgabenverlustwerte und der Aufgabengewichte der Vielzahl von Aufgabenverarbeitungsmodulen;
Aktualisieren, falls bestimmt wird, dass das multimodale Modell die voreingestellte Iterations-Stoppbedingung anhand des Gesamtverlustwerts nicht erfüllt, von Parametern des multimodalen Modells, um ein trainiertes multimodales Modell zu erhalten, und Hernehmen des trainierten multimodalen Modells als neues multimodales Model.

7. Verfahren nach Anspruch 6, **dadurch gekennzeichnet, dass** das Erhalten eines Aufgabenverlustwerts jedes Aufgabenverarbeitungsmoduls des multimodalen Modells anhand der zweiten Beispielmenge umfasst:
Eingeben des Beispielobjekts in ein Beispielsegmentierungsmodul, um nach Segmentierung eine Vielzahl von ersten Beispielobjektmerkmalen zu erhalten, wobei das Beispielsegmentierungsmodul ein Objektssegmentierungsmodul umfasst, das einem Objekttyp des Beispielobjekts entspricht;
Eingeben der Vielzahl der ersten Beispielobjektmerkmale in das Merkmalsextraktionsmodul, um ein von dem Merkmalsextraktionsmodul ausgegebenes zweites Beispielobjektmerkmal zu erhalten;
Eingeben des zweiten Beispielobjektmerkmals in ein Beispielverarbeitungsmodul, um ein von dem Beispielverarbeitungsmodul ausgegebenes Vorhersageergebnis zu erhalten, wobei das Beispielverarbeitungsmodul ein dem Aufgabentyp entsprechendes Aufgabenverarbeitungsmodul umfasst;
Erhalten des Aufgabenverlustwerts jedes Aufgabenverarbeitungsmoduls anhand des Vorhersageergebnisses und des Beispielergebnisses.

8. Verfahren nach Anspruch 7, **dadurch gekennzeichnet, dass** das Eingeben des Beispielobjekts in ein Beispielsegmentierungsmodul, um nach Segmentierung eine Vielzahl von ersten Beispielobjektmerkmalen zu erhalten, umfasst:
Segmentieren, falls der Objekttyp des Beispielobjekts Bild oder Audio ist, um eine Vielzahl von Teilbeispielobjekten zu erhalten, wobei Teilbeispielobjekte, die aneinander angrenzen, teilweise überlappt werden;
Bestimmen der Vielzahl von ersten Beispielobjektmerkmalen anhand der Vielzahl von Teilbeispielobjekten.

9. Objektverarbeitungseinrichtung (1100), umfassend:
ein Objekterfassungsmodul (1101), das so konfiguriert ist, dass es ein zu verarbeitendes Zielobjekt erhält;
ein erstes Bestimmungsmodul (1102), das so konfiguriert ist, dass es einen Objekttyp des Zielobjekts bestimmt;
ein zweites Bestimmungsmodul (1103), das so konfiguriert ist, dass es einen Aufgabentyp bestimmt, der einer Zielaufgabe zur Verarbeitung des Zielobjekts entspricht;
ein Objektverarbeitungsmodul (1104), das so konfiguriert ist, dass es das Zielobjekt, den Objekttyp und den Aufgabentyp in ein vorab generiertes Zielmodell eingibt, um ein von dem Zielmodell ausgegebenes Zielergebnis zu erhalten, wobei das Zielmodell ein monomodales Objekt oder ein multimodales Objekt ist und das Zielergebnis ein Objekterkennungsergebnis oder ein Objektklassifizierungsergebnis ist;
wobei das Zielmodell ein Merkmalsextraktionsmodul, eine Vielzahl von Objektsegmentierungsmodulen und eine Vielzahl von Aufgabenverarbeitungsmodulen umfasst, wobei das Merkmalsextraktionsmodul mit der Vielzahl von Objektsegmentierungsmodulen und den verschiedenen Aufgabenverarbeitungsmodulen gekoppelt ist, verschiedene Objektsegmentierungsmodule verschiedenen Objekttypen entsprechen und verschiedene Aufgabenverarbeitungsmodule verschiedenen Aufgabentypen entsprechen,
wobei Objektverarbeitungsmodul (1104) weiter so konfiguriert ist, dass es:
das Zielobjekt in ein Zielsegmentierungsmodul eingibt, um nach Segmentierung eine Vielzahl von ersten Objektmerkmalen zu erhalten, wobei das Zielsegmentierungsmodul ein dem Objekttyp entsprechendes Objektsegmentierungsmodul umfasst,
die Vielzahl von ersten Objektmerkmalen in das Merkmalsextraktionsmodul eingibt, um ein von dem Merkmalsextraktionsmodul ausgegebenes zweites Objektmerkmal zu erhalten, und
das zweite Objektmerkmal in ein Zielverarbeitungsmodul eingibt, um das von dem Zielverarbeitungsmodul ausgegebene Zielergebnis zu erhalten, wobei das Zielverarbeitungsmodul ein dem Aufgabentyp entsprechendes Aufgabenverarbeitungsmodul umfasst,
wobei die Objektverarbeitungseinrichtung **dadurch gekennzeichnet ist, dass** das Merkmalsextraktionsmodul eine gemeinsam genutzte Schicht und Kandidatenanpassungsschichten umfasst, wobei jede der Kandidatenanpassungsschichten einem anderen Aufgabentyp entspricht,
wobei das Objektverarbeitungsmodul (1104) weiter so konfiguriert ist, dass es:
Merkmalsextraktion an der Vielzahl von ersten Objektmerkmalen anhand der gemeinsam genutzten Schicht und einer Zielanpassungsschicht durchführt, um das zweite Objektmerkmal zu erhalten, wobei die Zielanpassungsschicht eine dem Aufgabentyp entsprechende Kandidatenanpassungsschicht ist.

10. Computerlesbares Medium, auf dem ein Computerprogramm gespeichert ist, **dadurch gekennzeichnet, dass** das Computerprogramm, wenn es von einer Verarbeitungseinrichtung ausgeführt wird, Schritte des Verfahrens nach einem der Ansprüche 1-8 ausführt.

11. Elektronische Vorrichtung (2000), **dadurch gekennzeichnet, dass** sie umfasst:
eine Speichereinrichtung (2008), auf der ein Computerprogramm gespeichert ist;
eine Verarbeitungseinrichtung (2001), die so konfiguriert ist, dass sie das Computerprogramm auf der Speichereinrichtung (2008) ausführt, um Schritte des Verfahrens nach einem der Ansprüche 1-8 auszuführen.

## Revendications

1. Procédé de traitement d'objet, dans lequel le procédé comprend :
l'obtention (S101) d'un objet cible à traiter ;
l'entrée (S104) de l'objet cible, d'un type d'objet de l'objet cible et d'un type de tâche correspondant à une tâche cible pour traiter l'objet cible dans un modèle cible pré-généré pour obtenir un résultat cible délivré en sortie par le modèle cible, dans lequel le modèle cible est un objet monomodal ou un objet multimodal, et le résultat cible est un résultat de reconnaissance d'objet ou un résultat de classification d'objet ;
dans lequel le modèle cible comprend un module d'extraction de caractéristiques, une pluralité de modules de segmentation d'objet et une pluralité de modules de traitement de tâches, dans lequel le module d'extraction de caractéristiques est couplé à la pluralité de modules de segmentation d'objet et aux différents modules de traitement de tâches, les différents modules de segmentation d'objet correspondent à différents types d'objets et les différents modules de traitement de tâches correspondent à différents types de tâches,
dans lequel l'entrée (S104) de l'objet cible, du type d'objet et du type de tâche dans le modèle cible pré-généré pour obtenir le résultat cible délivré en sortie par le modèle cible comprend :
l'entrée (S1041) de l'objet cible dans un module de segmentation cible pour obtenir une pluralité de premières caractéristiques d'objet après segmentation, dans lequel le module de segmentation cible comprend un module de segmentation d'objet correspondant au type d'objet ;
l'entrée (S1042) de la pluralité de premières caractéristiques d'objet dans le module d'extraction de caractéristiques pour obtenir une seconde caractéristique d'objet délivrée en sortie par le module d'extraction de caractéristiques ;
l'entrée (S1043) de la seconde caractéristique d'objet dans un module de traitement cible pour obtenir le résultat cible délivré en sortie par le module de traitement cible, dans lequel le module de traitement cible comprend un module de traitement de tâches correspondant au type de tâche,
dans lequel le procédé est **caractérisé en ce que** le module d'extraction de caractéristiques comprend une couche partagée et des couches d'adaptation candidates, chacune des couches d'adaptation candidates correspond à un type de tâche différent ; l'entrée (S1042) de la pluralité de premières caractéristiques d'objet dans le module d'extraction de caractéristiques pour obtenir la seconde caractéristique d'objet délivrée en sortie par le module d'extraction de caractéristiques comprend :
l'exécution de l'extraction de caractéristiques sur la pluralité de premières caractéristiques d'objet selon la couche partagée et une couche d'adaptation cible pour obtenir la seconde caractéristique d'objet, dans lequel la couche d'adaptation cible est une couche d'adaptation candidate correspondant au type de tâche.

2. Procédé selon la revendication 1, **caractérisé en ce que** le modèle cible est généré par :
l'obtention (S501) d'une pluralité de premiers ensembles d'échantillons, dans lequel chacun de la pluralité de premiers ensembles d'échantillons comprend une pluralité d'objets d'échantillon et un résultat d'échantillon correspondant à chacun de la pluralité d'objets d'échantillon, et différents premiers ensembles d'échantillons correspondent à différents types de tâches ;
la détermination (S502) d'un deuxième ensemble d'échantillons selon la pluralité de premiers ensembles d'échantillons ;
l'entraînement (S503) d'un modèle multimodal selon le deuxième ensemble d'échantillons pour obtenir le modèle cible.

3. Procédé selon la revendication 2, **caractérisé en ce que** la détermination d'un deuxième ensemble d'échantillons selon la pluralité de premiers ensembles d'échantillons comprend :
la prise de la pluralité des premiers ensembles d'échantillons comme deuxième ensemble d'échantillons ; ou
l'échantillonnage de la pluralité de premiers ensembles d'échantillons en fonction des types de tâches pour obtenir le deuxième ensemble d'échantillons.

4. Procédé selon la revendication 3, **caractérisé en ce que** l'échantillonnage de la pluralité de premiers ensembles d'échantillons selon les types de tâches pour obtenir le deuxième ensemble d'échantillons comprend :
la détermination de pondérations d'échantillonnage selon les types de tâches ;
l'échantillonnage de chacun de la pluralité de premiers ensembles d'échantillons selon les pondérations d'échantillonnage pour obtenir un troisième ensemble d'échantillons correspondant à chacun de la pluralité de premiers ensembles d'échantillons ;
la détermination du deuxième ensemble d'échantillons selon le troisième ensemble d'échantillons.

5. Procédé selon la revendication 4, **caractérisé en ce que** la détermination du deuxième ensemble d'échantillons selon le troisième ensemble d'échantillons comprend :
la prise du troisième ensemble d'échantillons comme deuxième ensemble d'échantillons ; ou
la prise d'un troisième ensemble d'échantillons avec un même type de tâche qu'un module de traitement de tâches du modèle cible comme deuxième ensemble d'échantillons.

6. Procédé selon la revendication 2, **caractérisé en ce que** l'entraînement d'un modèle multimodal selon le deuxième ensemble d'échantillons pour obtenir le modèle cible comprend :
l'exécution d'une étape d'entraînement de modèle de manière cyclique selon le deuxième ensemble d'échantillons, jusqu'à ce que le modèle multimodal entraîné soit déterminé comme répondant à une condition d'arrêt d'itération prédéfinie, et la prise du modèle multimodal entraîné comme modèle cible ;
dans lequel l'étape d'entraînement de modèle comprend :
l'obtention d'une valeur de perte de tâche de chaque module de traitement de tâches du modèle multimodal selon le deuxième ensemble d'échantillons, dans lequel la valeur de perte de tâche est utilisée pour caractériser une différence entre un résultat de prédiction délivré en sortie par le module de traitement de tâches et le résultat d'échantillon ;
le calcul d'une valeur de perte globale selon les valeurs de perte de tâche et les pondérations de tâche de la pluralité des modules de traitement de tâches ;
la mise à jour, dans le cas où le modèle multimodal n'est pas déterminé comme répondant à la condition d'arrêt d'itération prédéfinie selon la valeur de perte globale, de paramètres du modèle multimodal pour obtenir un modèle multimodal entraîné, et la prise du modèle multimodal entraîné comme nouveau modèle multimodal.

7. Procédé selon la revendication 6, **caractérisé en ce que** l'obtention d'une valeur de perte de tâche de chaque module de traitement de tâches du modèle multimodal selon le deuxième ensemble d'échantillons comprend :
l'entrée de l'objet d'échantillon dans un module de segmentation d'échantillon pour obtenir une pluralité de premières caractéristiques d'objet d'échantillon après segmentation, dans lequel le module de segmentation d'échantillon comprend un module de segmentation d'objet correspondant à un type d'objet de l'objet d'échantillon ;
l'entrée de la pluralité des premières caractéristiques d'objet d'échantillon dans le module d'extraction de caractéristiques pour obtenir une seconde caractéristique d'objet d'échantillon délivrée en sortie par le module d'extraction de caractéristiques ;
l'entrée de la seconde caractéristique d'objet d'échantillon dans un module de traitement d'échantillon pour obtenir un résultat de prédiction délivré en sortie par le module de traitement d'échantillon, dans lequel le module de traitement d'échantillon comprend un module de traitement de tâches correspondant au type de tâche,
l'obtention de la valeur de perte de tâche de chaque module de traitement de tâches selon le résultat de prédiction et le résultat d'échantillon.

8. Procédé selon la revendication 7, **caractérisé en ce que** l'entrée de l'objet d'échantillon dans un module de segmentation d'échantillon pour obtenir une pluralité de premières caractéristiques d'objet d'échantillon après segmentation comprend :
la segmentation, dans le cas où le type d'objet de l'objet d'échantillon est une image ou un son, pour obtenir une pluralité de sous-objets d'échantillon, dans lequel les sous-objets d'échantillon qui sont adjacents les uns aux autres se chevauchant partiellement ;
la détermination de la pluralité de premières caractéristiques d'objet d'échantillon selon la pluralité de sous-objets d'échantillon.

9. Appareil de traitement d'objet (1100), comprenant :
un module d'obtention d'objet (1101), configuré pour obtenir un objet cible à traiter ;
un premier module de détermination (1102), configuré pour déterminer un type d'objet de l'objet cible ;
un second module de détermination (1103), configuré pour déterminer un type de tâche correspondant à une tâche cible pour traiter l'objet cible ;
un module de traitement d'objet (1104), configuré pour entrer l'objet cible, le type d'objet et le type de tâche dans un modèle cible pré-généré pour obtenir un résultat cible délivré en sortie par le modèle cible, dans lequel le modèle cible est un objet monomodal ou un objet multimodal, et le résultat cible est un résultat de reconnaissance d'objet ou un résultat de classification d'objet ;
dans lequel le modèle cible comprend un module d'extraction de caractéristiques, une pluralité de modules de segmentation d'objet et une pluralité de modules de traitement de tâches, dans lequel le module d'extraction de caractéristiques est couplé à la pluralité de modules de segmentation d'objet et aux différents modules de traitement de tâches, les différents modules de segmentation d'objet correspondent à différents types d'objets et les différents modules de traitement de tâches correspondent à différents types de tâches,
dans lequel le module de traitement d'objet (1104) est en outre configuré pour :
entrer l'objet cible dans un module de segmentation cible pour obtenir une pluralité de premières caractéristiques d'objet après segmentation, dans lequel le module de segmentation cible comprend un module de segmentation d'objet correspondant au type d'objet,
entrer la pluralité de premières caractéristiques d'objet dans le module d'extraction de caractéristiques pour obtenir une seconde caractéristique d'objet délivrée en sortie par le module d'extraction de caractéristiques, et
entrer la seconde caractéristique d'objet dans un module de traitement cible pour obtenir le résultat cible délivré en sortie par le module de traitement cible, dans lequel le module de traitement cible comprend un module de traitement de tâches correspondant au type de tâche,
dans lequel l'appareil de traitement d'objet est **caractérisé en ce que** le module d'extraction de caractéristiques comprend une couche partagée et des couches d'adaptation candidates, chacune des couches d'adaptation candidates correspond à un type de tâche différent,
dans lequel le module de traitement d'objet (1104) est en outre configuré pour :
effectuer l'extraction de caractéristiques sur la pluralité de premières caractéristiques d'objet selon la couche partagée et une couche d'adaptation cible pour obtenir la seconde caractéristique d'objet, dans lequel la couche d'adaptation cible est une couche d'adaptation candidate correspondant au type de tâche.

10. Support lisible par ordinateur, stockant sur celui-ci un programme informatique, **caractérisé en ce que** le programme informatique, lorsqu'il est exécuté par un appareil de traitement, met en œuvre les étapes du procédé selon l'une quelconque des revendications 1-8.

11. Dispositif électronique (2000), **caractérisé en ce qu'**il comprend :
un appareil de stockage (2008), stockant sur celui-ci un programme informatique ;
un appareil de traitement (2001), configuré pour exécuter le programme informatique sur l'appareil de stockage (2008) afin de mettre en œuvre les étapes du procédé selon l'une quelconque des revendications 1-8.
